Europäisches Patentamt

(19) European Patent Office

Office Européen des brevets

(11) Numéro de publication : **0 240 443 B1**

# (12) FASCICULE DE BREVET EUROPEEN

(45) Date de publication du fascicule du brevet :
**02.01.91 Bulletin 91/01**

(51) Int. Cl.⁵ : **F16K 3/02**

(21) Numéro de dépôt : **87420087.6**

(22) Date de dépôt : **01.04.87**

---

(54) **Vanne à guillotine.**

---

(30) Priorité : **01.04.86 FR 8605151**

(43) Date de publication de la demande :
**07.10.87 Bulletin 87/41**

(45) Mention de la délivrance du brevet :
**02.01.91 Bulletin 91/01**

(84) Etats contractants désignés :
**BE CH DE ES FR GB LI**

(56) Documents cités :
**FR-A- 2 159 087**
**FR-A- 2 279 998**
**GB-A- 1 183 339**
**US-A- 2 710 017**
**US-A- 3 610 569**
**US-A- 3 661 357**
**US-A- 4 335 733**

(73) Titulaire : **ERMIS**
**rue de la Gare**
**F-01300 Belley (FR)**

(72) Inventeur : **Baudet, Gérard**
**5, rue du Lac**
**F-74000 Annecy (FR)**
Inventeur : **Lezier, Pascal**
**Chemin de Coirat**
**F-73290 La MOtte Servolex (FR)**

(74) Mandataire : **de Beaumont, Michel**
**Cabinet Poncet 7, chemin de Tillier B.P. 317**
**F-74008 Annecy Cédex (FR)**

---

Jouve, 18, rue Saint-Denis, 75001 PARIS

## Description

La présente invention concerne une vanne à guillotine à haute étanchéité, à faible épaisseur et à faible encombrement transversal.

On connaît déjà des vannes à guillotine, par exemple telles que décrites dans le brevet FR-A-2 159 087, dans le brevet FR-A-1 053 141 ou dans le brevet FR-A-2 020 458, dans lesquelles le corps de vanne comprend un logement transversal traversé par un passage principal axial pour le fluide à réguler; une pelle coulisse dans le logement transversal entre une position ouverte et une position fermée ; des moyens de manoeuvre de la pelle, accessibles de l'extérieur, permettent son actionnement entre les positions ouverte et fermée ; les faces internes du logement transversal portent deux joints annulaires en opposition, la dimension des joints étant choisie de façon que ces derniers sont en appui entre eux lorsque la pelle est en position ouverte et viennent presser les faces opposées de la pelle lorsque celle-ci est en position fermée.

Un premier inconvénient de ces vannes connues, et en particulier de la vanne décrite dans le document FR-A-2 159 087, réside dans le fait que l'organe d'actionnement de la pelle est disposé dans le prolongement de la pelle selon son axe médian de translation. Il en résulte que, en position ouverte de la pelle, l'organe d'actionnement dépasse très largement du corps de la vanne, et augmente son encombrement.

Un autre inconvénient, concernant les vannes décrites dans les documents FR-A-1 053 141 et FR-A-2 020 458 réside dans le fait que l'entraînement de la vanne est effectué par une liaison à arbre axial et excentrique ; par une telle liaison, le mouvement de la pelle est une rotation excentrée autour de l'arbre d'entraînement, et un tel mouvement n'est pas linéaire et entraîne des difficultés lorsqu'on utilise la vanne dans un dispositif de régulation automatique.

Un autre inconvénient des vannes connues réside dans le fait que, pour permettre le montage des joints et de la pelle dans le corps, on a prévu un corps en deux demi-coquilles se joignant selon un plan de joint transversal parallèle au plan de la pelle d'obturation, c'est-à-dire perpendiculaire au passage axial principal d'écoulement de fluide à réguler. Une telle forme de corps de vanne conduit à prévoir des plans de joint dont la surface est importante. Ces plans de joint, exécutés par usinage en reprise, doivent présenter une planéité suffisante pour assurer une bonne étanchéité. Il en résulte un coût de fabrication élevé, et cela explique pourquoi ces types de vannes n'ont jusqu'à ce jour pas donné lieu à des exploitations commerciales conséquentes dans les applications dans lesquelles les vannes doivent être relativement bon marché.

Un autre inconvénient de cette structure connue de corps de vanne réside dans le fait que le changement des joints annulaires nécessite le démontage du corps entier de vanne, ce qui est une opération délicate et fastidieuse, et nécessite le démontage de l'ensemble des joints de la vanne. De plus, les joints étant accessibles par l'intérieur du corps, il est nécessaire de prévoir un corps présentant une épaisseur relativement importante, ce qui augmente l'encombrement axial de la vanne.

Le document US-A-3 610 569 décrit une vanne dans laquelle l'organe d'obturation est actionné par deux tiges de manoeuvre décalées latéralement de part et d'autre de l'organe d'obturation et dans le plan de cet organe. Pour réduire les frottements entre l'organe d'obturation et le siège du corps de vanne, le document enseigne de prévoir un siège rétractable formé d'une bague cylindrique se déplaçant par rapport au corps. Une telle solution est complexe, et elle nécessite non seulement des moyens de joints rétractables mais en outre des moyens pour actionner ces joints rétractables.

Le document GB-A-l 183 339 décrit également une vanne dans laquelle l'organe d'obturation est translaté par deux tiges de manoeuvre placées de part et d'autre de la pelle, dans le plan de celle-ci.

Les documents US-A-3 610 569 et GB-A-l 183 339 décrivent des dispositifs relativement complexes, puisque l'organe d'obturation doit être entraîné par deux tiges, ce qui revient à multiplier les organes d'entrainement par rapport à une solution selon le document FR-A-2 159 087.

Un premier objet de la présente invention est de prévoir une vanne dont le corps présente un encombrement transversal réduit, en permettant l'entraînement de la pelle par une seule tige de commande décalée latéralement, malgré les frottements apparaissant entre la pelle et le siège lors des mouvements de la pelle. Malgré la présence d'une seule tige de commande décalée latéralement, l'invention permet à la pelle d'obturation un mouvement de translation transversale compatible avec les dispositifs de régulation automatique.

Un autre objet de l'invention est de prévoir une telle vanne présentant un encombrement axial très réduit, notamment grâce à la constitution particulière du corps de vanne, et grâce à la disposition décalée latéralement des moyens d'entrainement de la pelle d'obturation.

L'invention a en outre pour objet de réduire considérablement le coût de fabrication du corps de vanne, en permettant d'utiliser des pièces brutes de fonderie assemblées les unes aux autres selon des plans de joint dont la surface est très réduite ; selon l'invention, les cotes d'ajustage précises nécessitant un usinage en reprise sont prévues sur des pièces rapportées dont les usinages sont très aisés. On évite ainsi les usinages en reprise sur le corps lui-même, ou plus exactement on les prévoit sur des surfaces de corps facilement accessibles et de faible dimension. On réalise ainsi une structure très particulière de corps de vanne, pour une vanne à guillotine plate à corps intégral c'est-à-dire dont le corps contient la totalité de la pelle d'obturation.

Pour atteindre ces objets ainsi que d'autres, la vanne selon l'invention se caractérise par la constitution particulière des organes d'entraînement de la pelle d'obturation. L'invention concerne en outre une constitution particulière du corps de vanne et des moyens de maintien des joints d'étanchéité.

Pour cela, l'invention prévoit une vanne à guillotine dont le corps comprend un passage principal axial pour le fluide à réguler, un logement transversal traversé par ledit passage et dans lequel coulisse une pelle entre une position ouverte et une position fermée, des moyens de manoeuvre de la pelle comprenant une tige de manoeuvre disposée dans le corps de vanne selon une position sensiblement parallèle à l'axe de déplacement de la pelle d'obturation, le logement transversal ayant des dimensions propres à contenir entièrement la pelle tant dans la position ouverte que dans la position fermée, les faces internes opposées du logement comprenant deux rainures périphériques audit passage et en vis-à-vis qui reçoivent des joints annulaires élastiques, la dimension des rainures et des joints étant telle que ces derniers sont en appui entre eux en position ouverte et viennent presser les faces opposées de la pelle en position fermée, caractérisée en ce que :

- les moyens de manoeuvre comprennent une seule tige décalée latéralement dans le plan de la pelle de façon à border l'un des côtés de la pelle, auquel elle est reliée selon une zone intermédiaire dudit côté de pelle, la tige sortant dudit logement par un passage latéral,

- le guidage de la pelle dans le sens axial est assuré par les joints annulaires élastiques, la tige de manoeuvre étant reliée à la pelle par une chape et des goupilles axiales, la chape présentant deux branches disposées de part et d'autre de la pelle et écartées d'une distance supérieure à l'épaisseur du bord correspondant de pelle, pour laisser un jeu axial et un libre débattement axial de la pelle entre les joints d'obturation.

Par cette disposition, la liaison entre la tige de manoeuvre et la pelle s'effectue en une zone latérale intermédiaire, et la tige est disposée selon un axe parallèle au déplacement de la pelle. On réduit ainsi considérablement l'encombrement transversal de la vanne. Une telle disposition décentrée d'entraînement est notamment rendue possible par le fait que les forces de frottement de la pelle sur les joints toriques sont faibles.

Selon un mode de réalisation, la tige de manoeuvre comprend une partie filetée sur laquelle se déplace, par rotation de la tige, un écrou solidaire de la chape ; dans ce mode de réalisation, il est possible d'utiliser une tige qui ne dépasse pratiquement pas du corps, seul un bouton de manoeuvre étant accessible de l'extérieur comme le représente la figure I.

Selon un autre mode de réalisation, la tige de manoeuvre est une tige de vérin, solidaire de la chape, et admettant un mouvement de translation.

En ce qui concerne la structure du corps de vanne selon l'invention, le corps comprend une partie principale, traversée par le passage axial principal pour le fluide à réguler, et traversée perpendiculairement par un logement transversal débouchant sur un côté ; le logement transversal est obturé par une seconde partie de corps ou chapeau radial, se rejoignant à la partie principale de corps selon un plan de joint. Les deux parties de corps sont assemblées par exemple par boulonnage.

Selon un autre aspect de l'invention, les joints annulaires sont contenus dans deux sièges de joint annulaires rapportés sur la partie principale de corps; les sièges de joints sont rapportés sur la partie principale de corps par translation axiale depuis l'extérieur vers l'intérieur de part et d'autre de la partie principale de corps, chaque siège étant conformé extérieurement pour se plaquer intérieurement sur une surface annulaire correspondante du corps et venir en butée contre une face transversale correspondante appropriée du corps. On peut avantageusement solidariser les sièges de joint au corps par emmanchement en force. Une telle disposition facilite le montage des joints, ainsi que leur démontage pour leur changement : il suffit en effet de retirer les sièges de joint, qui sont accessibles de l'extérieur, sans avoir à démonter l'ensemble du corps lui-même.

Selon un autre aspect de l'invention, les sièges rapportés de joint constituent en eux-mêmes et réalisent la portée de joint extérieure, c'est-à-dire la surface destinée à assurer l'étanchéité avec la bride de canalisation raccordée à la vanne. Cette disposition permet, par réglage de l'épaisseur du siège de joint, de régler la pression exercée par le joint annulaire sur la pelle d'obturation ; avec un même corps de vanne, on peut également adapter des types de joints différents, nécessitant des dimensions et des pressions différentes, en adaptant des sièges de joint appropriés.

Ces objets, caractéristiques et avantages ainsi que d'autres de la présente invention, apparaîtront plus en détail dans la description ci-après d'un mode de réalisation particulier faite en relation avec les figures jointes parmi lesquelles :

- la figure 1 est une vue de face en coupe d'une vanne à guillotine selon un mode de réalisation de la présente invention ;
- la figure 2 est une vue en coupe selon la ligne IV-IV de la vanne à guillotine de la figure 1 ; et
- la figure 3 est une vue en coupe selon la ligne V-V de la vanne à guillotine de la figure 1.

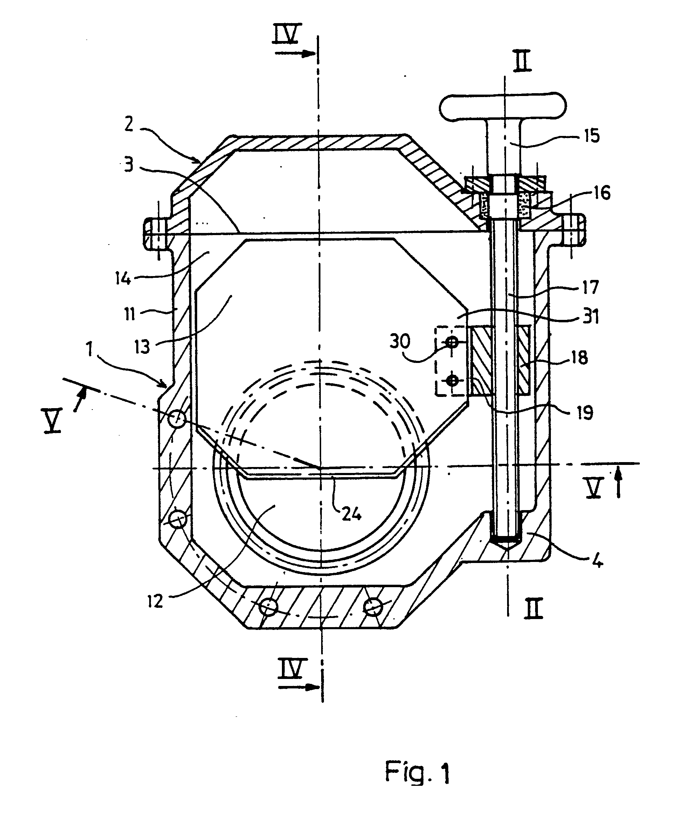

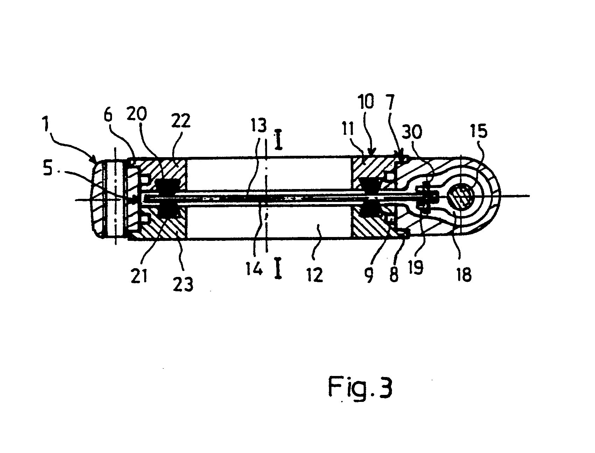

Comme le représentent les figures 1 et 3, la vanne à guillotine selon la présente invention comprend un corps principal 11 traversé par un passage axial 12 selon l'axe I-I pour le fluide dont la vanne vise à réguler l'écoulement et une pelle 13 complètement contenue dans un logement 14 transversal ménagé dans le corps de vanne. Le logement transversal 14 s'étend transversalement par raport au passage axial 12, selon un axe IV-IV perpendiculaire à l'axe I-I. La pelle 13 est montée à coulissement dans le logement transversal 14 et peut se déplacer en translation selon l'axe IV-IV, sa surface restant perpendiculaire à l'axe I-I. Dans les figures, la pelle 13 est représentée en une position de fermeture intermédiaire et est actionnée par une tige de manoeuvre 15 latérale sortant du corps de vanne par un passage latéral 16 muni d'un presse-étoupe. La tige de manoeuvre 15 est disposée, comme le représentent les figures, selon un axe II-II sensiblement parallèle à l'axe IV-IV de déplacement de la pelle ou axe du logement transversal 14, et est décalée latéralement dans le plan de la pelle 13 de façon à border l'un des côtés de la pelle. La tige de manoeuvre 15 est munie d'une partie filetée 17 sur laquelle est monté un écrou 18 solidaire d'une chape 19 et de deux goupilles 30 axiales. La chape comporte deux bras dont l'écartement est supérieur à l'épaisseur de la partie latérale 31 de la pelle qui est insérée entre eux, pour permettre un libre débattement axial de la pelle. Les goupilles 30 traversent des trous correspondants de la partie latérale 31 de pelle, et rejoignent les bras de la chape.

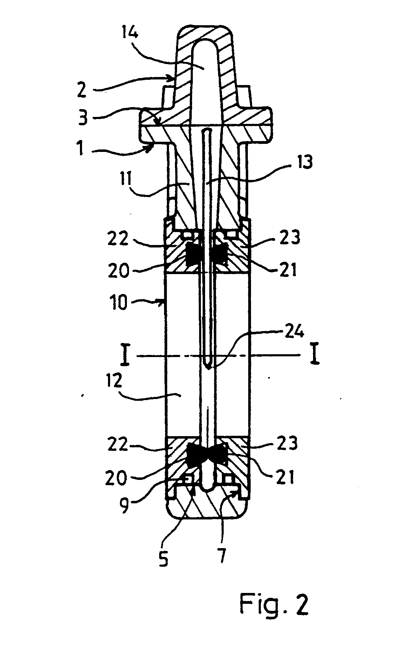

La figure 2 est une vue en coupe selon la ligne IV-IV de la figure 1. On peut y voir la pelle 13 dans le logement 14. La pelle 13 est plus étroite que le logement transversal 14, pour permettre le libre débattement axial de la pelle. La région de l'ouverture axiale 12 est délimitée par des joints toriques 20 et 21 contenus dans des logements annulaires adéquats ménagés dans des sièges de joint 22 et 23.

Les logements annulaires des sièges de joint 22 et 23, et les joints 20 et 21 sont dimensionnés de sorte que, comme on peut le voir en partie basse de la figure 2, quand la pelle n'est pas glissée entre les joints, ceux-ci sont en appui l'un contre l'autre. Et, comme on peut le voir dans la partie haute de la figure, la pelle vient se glisser entre ces joints, les comprimant encore davantage.

La figure 3 est une vue en coupe selon la ligne V-V de la figure 1, et on peut y voir à nouveau la disposition particulière des joints 20 et 21 et de leurs logements annulaires. Dans le logement représenté à la partie droite de la figure 3 se trouve la tige de manoeuvre 15 reliée à la pelle 13 de la façon illustrée en figure 1 par l'écrou 18, la chape 19 et les goupilles 30.

Dans le dispositif représenté en figures 1 à 3, la pelle 13 ne sort jamais du logement 14 ; on évite ainsi toute pollution par le passage de la pelle de l'extérieur vers l'intérieur du corps de vanne. D'autre part, la tige de manoeuvre pénétrant dans le logement par un presse-étoupe annulaire 16 dans lequel elle tourne, on obtient une excellente étanchéité. En outre, du fait que les joints sont en contact même en l'absence de la pelle entre eux, même si cette disposition n'empêche pas le liquide contenu dans les conduites d'entrée et de sortie de pénétrer dans le logement 14, ceci réalise un certain filtrage et évite que des particules éventuellement corrosives ou abrasives pénètrent dans le logement.

D'autre part, dans les figures 1 et 3 apparaissent les détails de constitution du corps de vanne selon la présente invention. Le corps de vanne 11 est constitué de deux parties, une partie principale 1 la plus importante, et une seconde partie 2 plus réduite ou chapeau. Les deux parties de corps se rejoignent selon un plan de joint 3 parallèle à l'axe I-I de passage principal et décalé par rapport à cet axe comme le représente la figure 1, et perpendiculaire à l'axe IV-IV du logement transversal 14. La partie principale 1 du corps est creuse, et forme la majeure partie du logement transversal 14 contenant la pelle d'obturation 13, le logement transversal 14 débouchant en haut de la partie principale de corps et étant obturé par le couvercle 2. Sur la partie droite de la figure 1, le couvercle 2 comprend en outre le presse-étoupe 16 pour le passage de la tige de manoeuvre 15, la tige étant par ailleurs maintenue à son extrémité basse dans un alésage 4 ménagé dans le fond de la partie principale 1 de corps.

La partie principale 1 de corps comprend un passage axial pour la constitution du passage principal 12 pour le fluide à réguler. Pour cela, le passage axial présente une surface intérieure cylindrique 5 d'axe I-I, bordée à ses deux extrémités d'un logement annulaire périphérique tel que le logement 6, de diamètre plus important, le fond du logement 6 ou face transversale 7 étant une face usinée dont la cote est déterminée avec précision pour former butée de positionnement axial du siège de joint correspondant 22 ou 23. Selon cette constitution, mieux représentée sur les figures 2 et 3, les sièges de joint 22 et 23 sont insérés par coulissement axial en force de part et d'autre de la partie principale 1 de corps, et viennent en butée contre les fonds 7 de logements 6. Pour cela, les sièges de joint comportent une nervure périphérique telle que la nervure 8, venant s'insérer dans le logement correspondant 6. Les sièges de joint comportent une surface extérieure cylindrique conformée pour s'adapter sans jeu dans le logement cylindrique axial de la partie principale 1 de corps, des gorges annulaires telles que la gorge 9 étant prévues pour le positionnement de joints toriques annulaires assurant l'étanchéité entre le siège de joint et la surface cylindrique axiale du corps.

La face extérieure 10 de chacun des sièges de joint est légèrement dépassante de la face extérieure correspondante du corps, et constitue en elle-même la portée de joint extérieure, pour se plaquer contre la bride correspondante de canalisation sur laquelle est assemblée la vanne.

On comprend que les sièges de joint 22 et 23 sont facilement interchangeables pour le changement des joints 20 et 21. D'autre part, les sièges de joint 22 et 23 déterminent la distance entre les joints 20 et 21 et les brides de canalisation. Le changement des sièges de joint 22 et 23 permet, par modification des cotes d'écartement entre le joint annulaire et la face de nervure 8 venant porter contre le fond 7 de logement 6, de modifier à volonté la distance entre les joints 20 et 21, et donc la pression qu'ils exercent contre la pelle 13.

Une telle constitution de corps permet la réalisation d'une vanne très plate, et d'un corps présentant un minimum de surfaces destinées à réaliser un plan de joint, telles que la surface 3.

Comme on peut le voir par exemple sur la partie basse de la figure 2 et en partie gauche de la figure 3, des protubérances supplémentaires du corps de vanne destinées à contenir des moyens de fixation tels que des alésages taraudés sont prévues sur le corps de vanne, ce qui permet la fixation du corps de vanne aux brides adjacentes de canalisation. Les diverses pièces pourront être assemblées par tout moyen classique : emboîtement, soudage, brasage, collage...

Dans un mode de réalisation pratique, la pelle qui a été représentée de façon seulement schématique pourra comprendre un bord d'attaque 24 en biseau pour mieux se glisser entre les joints et pour améliorer l'étanchéité entre les joints 20 et 21 au voisinage du bord d'attaque de la pelle quand celle-ci est à une position intermédiaire. D'autre part, de préférence, la pelle ne sera jamais complètement sortie d'une position où elle est partiellement insérée entre les joints, c'est à dire une position dans laquelle elle est un peu plus en haut que dans le cas de la figure 4, et ceci pour ne pas risquer de chasser les joints en dehors de leurs sièges lors de l'insertion de la pelle.

La présente invention n'est pas limitée aux modes de réalisation qui ont été explicitement décrits, mais elle en inclut les diverses variantes et généralisations contenues dans le domaine des revendications ci-après.

## Revendications

1. Vanne à guillotine dont le corps (11) comprend un passage principal axial (12) pour le fluide à réguler, un logement transversal (14) traversé par ledit passage et dans lequel coulisse une pelle (13) entre une position ouverte et une position fermée, des moyens de manoeuvre (15) de la pelle comprenant une tige (15) de manoeuvre disposée dans le corps (11) de vanne selon une position sensiblement parallèle à l'axe (IV-IV) de déplacement de la pelle d'obturation, le logement transversal (14) ayant des dimensions propres à contenir entièrement la pelle tant dans la position ouverte que dans la position fermée, les faces internes opposées du logement comprenant deux rainures (22, 23) périphériques audit passage et en vis-à-vis qui reçoivent des joints annulaires élastiques (20, 21), la dimension des rainures et des joints étant telle que ces derniers sont en appui entre eux en position ouverte et viennent presser les faces opposées de la pelle en position fermée, caractérisée en ce que :

- les moyens de manoeuvre comprennent une seule tige (15) décalée latéralement dans le plan de la pelle de façon à border l'un des côtés de la pelle, auquel elle est reliée selon une zone intermédiaire dudit côté de pelle, la tige sortant dudit logement par un passage latéral (16),

- le guidage de la pelle dans le sens axial est assuré par les joints annulaires élastiques (20, 21), la tige de manoeuvre (15) étant reliée à la pelle par une chape (19) et des goupilles (30) axiales, la chape présentant deux branches disposées de part et d'autre de la pelle et écartées d'une distance supérieure à l'épaisseur du bord correspondant de pelle, pour laisser un jeu axial et un libre débattement axial de la pelle entre les joints d'obturation.

2. Vanne à guillotine selon la revendication 1, caractérisée en ce que la tige de manoeuvre (15) est munie d'une partie filetée (17) sur laquelle se déplace, par rotation de la tige, un écrou (18) solidaire de la chape (19).

3. Vanne à guillotine selon la revendication 1, caractérisée en ce que la tige de manoeuvre (15) est une tige de vérin, solidaire de la chape, et admettant un mouvement de translation.

4. Vanne à guillotine selon l'une quelconque des revendications 1 à 3, caractérisée en ce que le corps (11) comprend une partie principale (1), traversée par le passage axial principal (12) pour le fluide à réguler, et traversée perpendiculairement par un logement transversal (14) débouchant sur un côté, le logement transversal étant obturé par une seconde partie (2) de corps ou chapeau radial, se rejoignant à la partie principale de corps selon un plan de joint (3).

5. Vanne à guillotine selon l'une quelconque des revendications 1 à 4, caractérisée en ce que les joints annulaires (20, 21) sont portés par deux sièges de joint annulaires (22, 23) rapportés, les sièges de joints étant rapportés sur la partie principale de corps par translation axiale depuis l'extérieur vers l'intérieur de part et d'autre de la partie principale (1) de corps.

6. Vanne à guillotine selon la revendication 5, caractérisée en ce que chaque siège de joint (22, 23) est conformé extérieurement pour se plaquer intérieurement sur une surface annulaire (5) correspondante du corps et venir en butée contre une face transversale correspondante (7) appropriée du corps.

7. Vanne à guillotine selon l'une des revendications 5 ou 6, caractérisée en ce que les sièges rapportés (22, 23) de joint constituent en eux-mêmes et réalisent la portée de joint extérieure (10) destinée à assurer l'étanchéité avec la bride de canalisation raccordée à la vanne.

**Ansprüche**

1. Flachschieber, dessen Gehäuse (11) einen axialen Hauptdurchgang (12) für das zu regulierende Fluid, eine querverlaufende Kammer (14) enthält, die von dem Durchgang durchquert wird und in der ein Blatt (13) zwischen einer offenen Position und einer geschlossenen Position schiebt, wobei eine Betätigungseinrichtung (15) des Blattes, einen Betätigungsstift (15), der in dem Schieberkörper (11) gemäß einer im wesentlichen parallel zu einer Verschiebungsachse (IV-IV) des Absperrblattes verlaufenden Position angeordnet ist, wobei die querverlaufende Lagerung (14) Abmessungen aufweist, die dazu geeignet sind, das Blatt sowohl in geöffneter Position als auch in geschlossener Position vollständig zu enthalten, wobei die entgegengesetzten inneren Seiten der Lagerung zwei Nutelementen (22, 23),die peripher gegenüber dem Hauptdurchgang und gegenüber einander verlaufen und elastische ringförmige Abdichtungen (20,21) aufnehmen, wobei die Nuten und die Dichtungen eine derartige Abmessung aufweisen, daß diese in geöffneter Position sich aufeinander abstützen und in geschlossener Position gegen die entgegengesetzten Seiten des Blattes drücken, dadurch gekennzeichnet daß,

-die Betätigungseinrichtungen einen einzigen Stift (15) aufweisen, der seitlich in der Ebene des Blattes versetzt ist, um eine der Seiten des Blattes zu begrenzen, mit der er längs einer Zwischenzone der Seite des Blattes verbunden ist, wobei der Stift über einem seitlichen Durchlaß (16) aus der Kammer austritt,

- die Führung des Blattes in der axialen Richtung durch die elastischen ringförmigen Abdichtungen (20, 21) gewährleistet ist, wobei der Betätigungsstift (15) durch ein Bügelstück (19) und axiale Stifte (30) mit dem Blatt verbunden ist, wobei das Bügelstück zwei Zweige aufweist, die beiderseits des Blattes angeordnet und voneinander um einen Abstand entfernt sind, der größer ist als die Dicke des entsprechenden Randes des Blattes, um ein axiales Spiel und eine freie Axialbewegung der Schaufel zwischen den Sperrabdichtungen zu ermöglichen.

2. Flachschieber nach Anspruch 1, dadurch gekennzeichnet, daß der Betätigungsstift (15) mit einem mit Gewinde versehenen Teil (17) versehen ist, auf dem sich eine mit dem Bügelstück (19) festverbundene Schraubenmutter (18) durch Rotation des Stiftes bewegt.

3. Flachschieber nach Anspruch 1, dadurch gekennzeichnet, daß der Betätigungsstift (15) ein mit dem Bügelstück (19) festverbundener Stellstift ist, der eine Translationsbewegung erlaubt.

4. Flachschieber nach einem der Ansprüche 1 bis 3, dadurch gekennzeichnet, daß das Gehäusse (11) einen Hauptteil (1) aufweist, der von dem axialen Durchgang (12) für das zu regulierende Fluid durchquert wird, und von der querverlaufenden Lagerung (14), die auf einer Seite mündet, senkrecht durchquert wird, wobei die querverlaufende Lagerung durch einen zweiten Gehäuseteil (2) oder radialen Abdeckteil abgedeckt wird, der längs einer Abdichtungsebene (3) mit dem Hauptteil des Gehäuses verbunden ist.

5. Flachschieber nach einem der Ansprüche 1 bis 4, dadurch gekennzeichnet, daß die ringförmigen Abdichtungen (20,21) durch zwei ringförmig aufgebrachte Abdichtungssitze (22,23) getragen werden, wobei die Abdichtungssitze auf dem Hauptteil des Gehäuses durch eine axiale Translationsbewegung von beiderseits dem Hauptteil (1) des Gehäuses aufgebracht sind.

6. Flachschieber nach Anspruch 5, dadurch gekennzeichnet, daß jeder Abdichtungssitz (22, 23) außen derartig gebildet ist, um sich innen auf einer entsprechenden ringförmigen Oberfläche (5) des Gehäuses gesetzt zu werden und mit einer geeigneten, querverlaufenden entsprechenden Seite (7) des Gehäuses in Anschlag zu kommen.

7. Flachschieber nach Anspruch 5 oder 6, dadurch gekennzeichnet, daß die abgesetzten Abdichtungssitze (22, 23) selbst die äußere tragende Fläche (10) der Abdichtung bilden und ausmachen, die dazu bestimmt ist, die Abdichtung mit dem Rohrflansch, der mit dem Schieber verbunden ist, zu gewährleisten.

**Claims**

1. Guillotine valve whose body (11) comprises a main axial passage (12) for the fluid to be regulated, a transverse housing (14) through which said passage passes and in which a plate (13) slides between an open position and a closed position, means (15) for operating the plate comprising an operating rod (15) disposed in the valve body (11) in a position substantially parallel to the axis of movement (IV-IV) of the closure plate, the transverse housing (14) having dimensions adapted to contain the plate entirely both in the open position and in the closed position, the opposite internal faces of the housing comprising two grooves (22, 23) peripheral to said passage and facing each other which receive resilient annular seals (20, 21), the dimension of the grooves and of the seals being such that the latter bear against each other in the open position and press the opposite faces of the plate in the closed position, characterized in that:

- the operating means comprise a single rod (15) offset laterally in the plane of the plate so as to border one of the sides of the plate, to which it is connected in an intermediate zone of said plate side, the rod leaving the housing through a lateral passage (16),

- guiding of the plate in the axial direction is provided by resilient annular seals (20, 21), the operating rod (15) being connected to the plate by a fork (19) and axial pins (30), the fork having two legs disposed on each side of the plate and separated by a distance greater than the thickness of the corresponding plate edge, to leave an axial clearance and free axial movement of the plate between the seals.

2. Guillotine valve according to claim 1, characterized in that the operating rod (15) has a threaded portion (17) on which a nut (18), integral with the fork (19), moves by rotation of the rod.

3. Guillotine valve according to claim 1, characterized in that the operating rod (15) is a cylinder rod fast with the fork and allowing a translational movement.

4. Guillotine valve according to any one of claims 1 to 3, characterized in that the body (11) comprises a main portion (1), through which the main axial passage (12) passes for the fluid to be regulated, and through which passes perpendicularly a transverse housing (14) emerging on one side, the transverse housing being closed by a second body portion (2) or radial cap, joining the main body portion along a joint plane (3).

5. Guillotine valve according to any one of claims 1 to 4, characterized in that the annular seals (20, 21) are carried by two added annular seal seats (22, 23), the seal seats being fixed to the main body portion by axial translation from the outside to the inside on each side of the main body portion (1).

6. Guillotine valve according to claim 5, characterized in that each seal seat (22, 23) is formed outwardly so as to be applied inwardly on a corresponding annular surface (5) of the body and come into abutment against an appropriate corresponding transverse face (7) of the body.

7. Guillotine valve according to one of claims 5 or 6, characterized in that the added seal seats (22, 23) constitute by themselves and form the external seal bearing surface (10) providing sealing with the pipe flange connected to the valve.

Fig. 1

Fig. 2

Fig. 3